# EUROPEAN PATENT SPECIFICATION

(11) **EP 4 045 366 B1**
(45) Date of publication and mention of the grant of the patent: **20.03.2024**
(21) Application number: 19789946.1
(22) Date of filing: 15.10.2019
(51) Int. Cl.: B60S 1/34

(54) **A WINDSCREEN WIPER ARM**
WINDSCHUTZSCHEIBENWISCHERARM
BRAS D'ESSUIE-GLACE DE PARE-BRISE

(43) Date of publication of application: 24.08.2022
(73) Proprietor: Trico Belgium S.A., 6790 Aubange (BE)
(72) Inventor: TAILLARD, Arthur, 54440 Herserange (FR)
(74) Representative: Arnold & Siedsma
(86) International application number: PCT/EP2019/078001
(87) International publication number: WO 2021/073728

(56) References cited:
- EP-A1- 1 452 413
- EP-A1- 1 520 759
- DE-A1-102011 078 095
- US-B2- 7 788 761

## Description

### AMENDED INTRODUCTION TO THE DESCRIPTION

The present invention relates to a windscreen wiper arm, particularly for automobiles, comprising an arm member near a first end thereof arranged to be pivotally and detachably connected to a drive shaft for transferring a reciprocal movement to said arm member, said arm member being movable between a wiping position, wherein said arm member extends substantially parallel to a windscreen to be wiped, and an elevated position (i.e. not stable service position), wherein said arm member extends away from a windscreen to be wiped, said arm member near a second end thereof being arranged to be pivotally and detachably connected to a connecting device of a wiper blade (preferably of the flat blade type).

Such a windscreen wiper arm is known from European patent publication no. 1 514 752 of the same Applicant. In use, said known windscreen wiper arm is connected with a mounting head mounted on the drive shaft, wherein said windscreen wiper arm at one end thereof is pivotally connected to the mounting head by means of the pivot pin and at another end thereof is connected to a connecting device fixed to a wiper blade placed in abutment with said windscreen to be wiped. In use, the shaft rotates alternately in a clockwise and in a counter-clockwise sense carrying the mounting head into rotation also, which in turn draws the windscreen wiper arm into rotation and by means of said connecting device moves the wiper blade. Said oscillating arm can thus oscillate to-and-from between a first and second reversal positions. In the alternative, said mounting head is fixed for translation to a carriage, wherein said carriage can be translated alternately in a one linear direction and in another counter linear direction carrying said mounting head into translation.

Document EP 1 520 759 A1 discloses a windscreen wiper arm similar to that defined by the preamble of independent claim 1.

The present invention particularly relates to a windscreen wiper arm arranged to be connected to a wiper blade of the flat blade type or "yokeless blade", wherein no use is made of several yokes pivotally connected to each other, but wherein the wiper blade is biased by a carrier element, as a result of which it exhibits a specific curvature. Said wiper blade of the flat blade type particularly comprises an elastic, elongated carrier element, as well as an elongated wiper blade of a flexible material, which can be placed in abutment with a windscreen to be wiped, which wiper blade is connected to at least one longitudinal strip of the carrier element. Said longitudinal strip is also called a "flexor", while said connecting device is also indicated as a "connector". Often, said wiper blade includes at least one longitudinal slit, in which slit said longitudinal strip is disposed. In the alternative, said wiper blade and said longitudinal strip are glued together. Preferably, said wiper blade comprises a spoiler at a side thereof facing away from the windscreen to be wiped. The spoiler is also called an "air deflector" and is preferably made in one piece with said wiper blade through extrusion. Said longitudinal slit is preferably a central longitudinal slit accommodating said longitudinal strip. Said connecting device is preferably fixedly connected to the longitudinal strip(s) particularly through a welding, brazing ("soldering"), gluing or clamping operation or with the help of a pin inserted through said connecting device and said longitudinal strip(s). In the alternative or in addition thereto, said connecting device is clamped onto the flexible material of the wiper blade, particularly in case the latter is equipped with a central longitudinal slit for the carrier element.

In the framework of the present invention it is noted that the present invention is not restricted to the use of only one longitudinal strip forming the elastic carrier element that is particularly located in a central longitudinal slit of the wiper blade. Instead, said carrier element may also comprise two longitudinal strips, wherein said strips are disposed in opposite longitudinal slits of the wiper blade. Said slit(s) may be closed at one outer end. Instead or in addition thereto, said wiper blade and said longitudinal strip may be glued together.

It is further noted that the present invention is not restricted to automobiles, but also refers to rail coaches and other (fast) vehicles.

A disadvantage of the known windscreen wiper arm is that it is often used only as a front wiper arm or only as a rear wiper arm, as front wiper arms on the one hand and rear wiper arms on the other hand mutually differ in materials (plastic versus metal) used for the arm and the mounting head, forces exerted on the arm (including torsion), designs, etcetera.

It is an object of the invention to provide an improved windscreen wiper arm, wherein these disadvantages are obviated, in the sense that at minimum costs - without using complex machinery and additional tools - a simple windscreen wiper arm (also called "oscillating arm") is proposed to effectively clean a windscreen to be wiped, usable both on the front windscreen of a car and on the rear windscreen of a car.

In order to accomplish that objective, a windscreen wiper arm of the type referred to in the introduction is characterized according to the invention in that said windscreen wiper arm comprises a plate member arranged for connecting said arm member to said drive shaft, wherein said plate member is made of a resilient material and is biased in order to exert a pressure onto said arm member towards said windscreen to be wiped, wherein said plate member (4) is connected to a stiffening member (10) for pre-stressing said plate member (4) at the location of its connection to the stiffening member (10), and wherein said stiffening member (10) is provided with a hole (18) with a closed circumference arranged for accommodating said shaft (3).

Preferably, said plate member is elongated, wherein said plate member is resilient in a direction of its length in order to exert a pressure onto said arm member (and thus the wiper blade connected thereto) towards said windscreen to be wiped, and wherein said plate member is rigid in a direction of its width in order to withstand torsion forces exerted by a wiper blade during wiping (connected to said arm member).

In addition, on the one hand the windscreen wiper arm according to the invention allows for movability of the arm member between the wiping position and the elevated position (not stable in the sense that it moves back to the wiping position) with a single component (the plate member). In other words, the windscreen wiper arm according to the present invention does not require a complex mechanism with multiple components, such as springs and hinges, in order to move the arm member from the wiping position to the elevated position (e.g. for servicing, replacing wiper blades, et cetera). On the other hand, the invention allows for additional pressure on the arm member, which in turn ensures firm contact between the wiper blade and the windscreen to be wiped thereby.

Preferably, said plate member is a single constructional element made in one piece of resilient material. Said resilient material may for instance be a metal, a composite material, or the like. In particular, the resilient material may be aluminium, iron, carbon fibre-reinforced plastic, or the like. When the plate member is manufactured in one piece, the possibility of structural failure is strongly mitigated.

In a preferred embodiment of windscreen wiper arm in accordance with the invention said plate member has a hole with a closed circumference arranged for accommodating said shaft. Particularly, said plate member at a side thereof opposite said hole is connected to said arm member. Preferably, the shaft comprises a (preferably conical) part with internal or external thread in order to clamp the plate member thereto by means of a bolt or nut, respectively.

In awindscreen wiper arm according to the invention said plate member is connected to a stiffening member for pre-stressing said plate member at the location of its connection to the stiffening member. Particularly, said stiffening member is provided with a (preferably conical) receiving part having a hole with a closed circumference arranged for receiving/accommodating said (conical) part of said shaft. Said hole of said stiffening member is preferably co-axial with said hole of said plate member. In addition to pre-stressing the plate member, the stiffening member ensures that the plate member is substantially flat in the vicinity of its hole, such that when the plate member is clamped on the shaft, optimal friction between the plate member and the shaft is achieved, which in turn results in optimal torque transfer between the drive shaft and the arm member. Hence, the plate member and the stiffening member are directly connected to said drive shaft, without the interposition of any other part.

In another preferred embodiment of windscreen wiper arm in accordance with the invention said plate member is slidably connected to said stiffening member, and preferably along an S-shaped path. The S-shaped path prevents the plate member from being connected to the stiffening member upside down. Particularly, said plate member is slidably connected to said stiffening member by sliding said plate member from below said stiffening member, though an entrance hole thereof, on top of said stiffening member. Said stiffening member is preferably provided with opposite, downwardly and inwardly extending legs so to form a groove for guiding said plate member from below said stiffening member through said entrance hole thereof. As the legs extend downwardly, they prevent the plate member from being erroneously fastened to the bottom of the stiffening member. Said stiffening member is particularly provided with a longitudinal, resilient tongue for guiding and/or pressing said plate member inside said groove.

In another preferred embodiment of windscreen wiper arm according to the invention said stiffening member is provided with upwardly extending cams for form-closing or force-closing said plate member on top of said stiffening member. In addition, said cams may be permanently deformed onto the plate member after the plate member and stiffening member are connected with each other, such that a highly rigid connection is achieved therebetween. Particularly, said stiffening member is provided with upwardly extending protrusions for engaging into correspondingly shaped holes inside said plate member. The protrusions provide a connection between the plate member and stiffening member, such that a user is assured that they are properly aligned and connected by sensory feedback of the protrusions engaging into the correspondingly shaped holes.

In another preferred embodiment of windscreen wiper arm in accordance with the invention said stiffening member is provided with a transverse bridge limiting an upward movement of said arm member relative to said shaft in mounted position thereof. Accordingly, the bridge may prevent a user from lifting the windscreen wiper arm to such an extent that the plate member would become permanently deformed, diminishing its bias.

In another preferred embodiment of windscreen wiper arm in accordance with the invention said legs and said bridge of said stiffening member delimit said entrance hole of said stiffening member. Accordingly, the stiffening member is inherently provided with the entrance hole, which saves manufacturing costs and decreases structural complexity.

In another preferred embodiment of windscreen wiper arm in accordance with the invention said plate member is provided with at least one weakening hole in order to decrease the rigidity thereof in direction of its length. In particular, said weakening hole may be a rectangular hole, an oval hole, a circular hole, or the like. A plurality of weakening holes may be provided along the plate member in order to decrease its rigidity (stiffness) to a desired extent. Accordingly, a plate member, without weakening holes, may be mass-produced for a variety of applications (e.g. different vehicles, windscreens, or the like), which is economically attractive. After mass-production the plate members may be provided with the weakening holes in order to make it more suitable for a specific application (for example, with a different pre-bend to apply a different force, dependent on the specific application).

Preferably, an elongated cap is connected to at least one of the drive shaft, the arm member and the connecting device on the wiper blade. Alternatively, the cap may be connected to the plate member and/or stiffening member.

The invention will now be explained in more detail with reference to figures illustrated in a drawing, wherein:
- figure 1 shows a side view and a bottom view of an arm member connected to a plate member according to a preferred variant of the invention;
- figure 2 corresponds to figure 1, in addition with a cross-sectional side view along the line A-A, wherein the plate member is connected to a stiffening member, all in a wiping position;
- figure 3 corresponds to figure 2, with the difference that the arm member, the plate member and the stiffening member are now in a (non-stable) elevated position;
- figure 4 shows how the plate member and the stiffening member are interconnected in successive steps 1 through 4;
- figure 5 is a side view, partly in cross-section, of the plate member and the stiffening member of figures 2 through 4 directly mounted on a drive shaft; and
- figure 6 shows several views on the stiffening member depicted in the above figures.

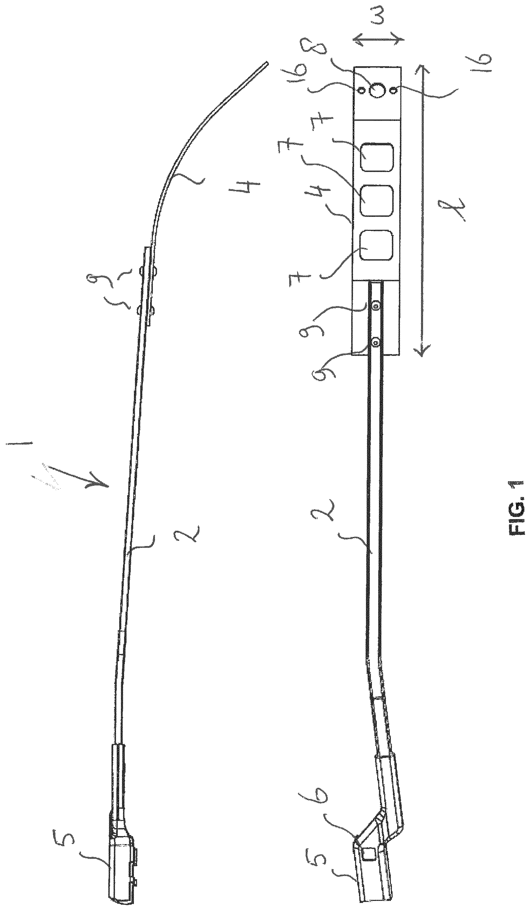

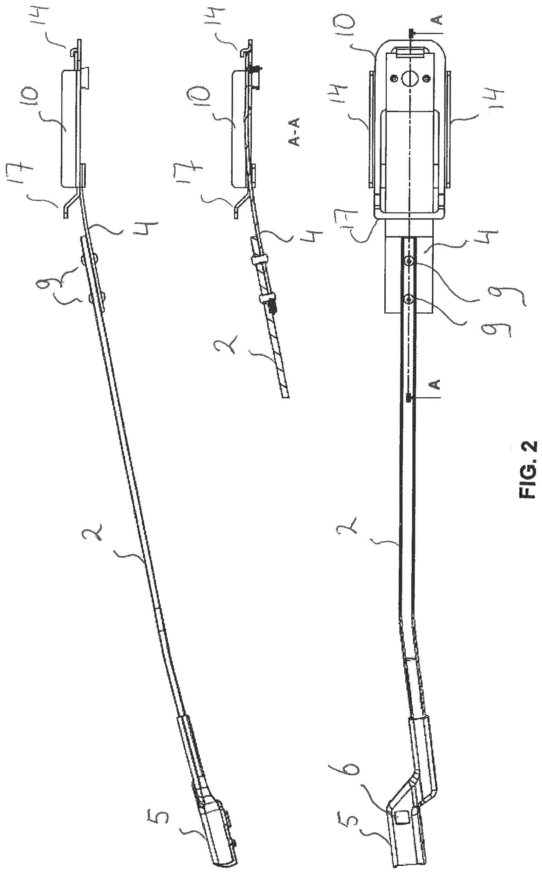

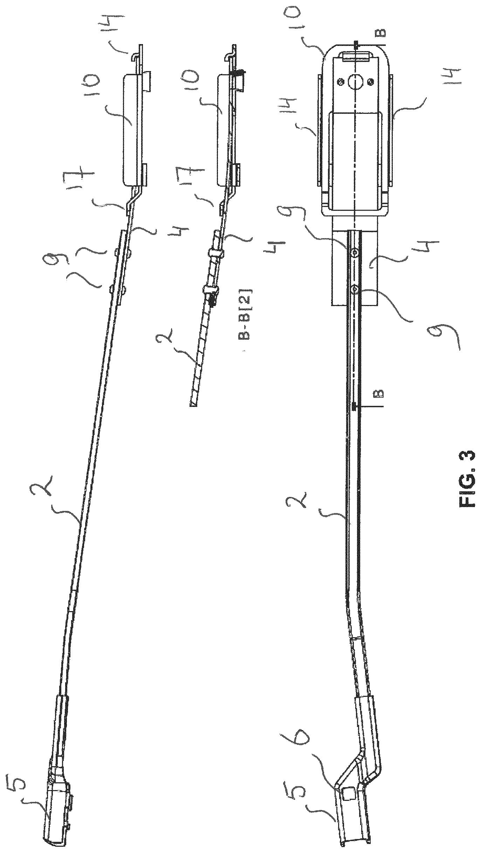

As illustrated in figure 1, a windscreen wiper arm 1 comprises an arm member 2 near a first end thereof arranged to be pivotally and detachably connected to a drive shaft 3, with the interposition of an elongated plate member 4 made of spring steel, for transferring a reciprocal movement to said arm member 2. The shaft 3 is driven, via a mechanism not illustrated, by a small motor. In use, the shaft 3 rotates alternately in a clockwise and in a counter-clockwise sense carrying the arm member 4 into rotation also, which in turn draws the connecting device and moves the wiper blade. Said arm member 2 is hingeable between a wiping position (see figure 2), wherein said arm member 2 extends substantially parallel to a windscreen to be wiped, and an elevated position (see figure 3), wherein said arm member 2 extends away from a windscreen to be wiped. Said arm member 2 near a second end thereof being arranged to be pivotally and detachably connected to a connecting device of a wiper blade (not shown). For example, the arm member 2 at said second end is equipped with an adapter 5 having a U-shaped cross-section at its connection to said connecting device, wherein reference is made to figures 1 through 3. A base of said U-shaped cross-section has a hole 6 for snappingly receiving a resilient tongue of the connecting device, in accordance with a so-called bayonet connection.

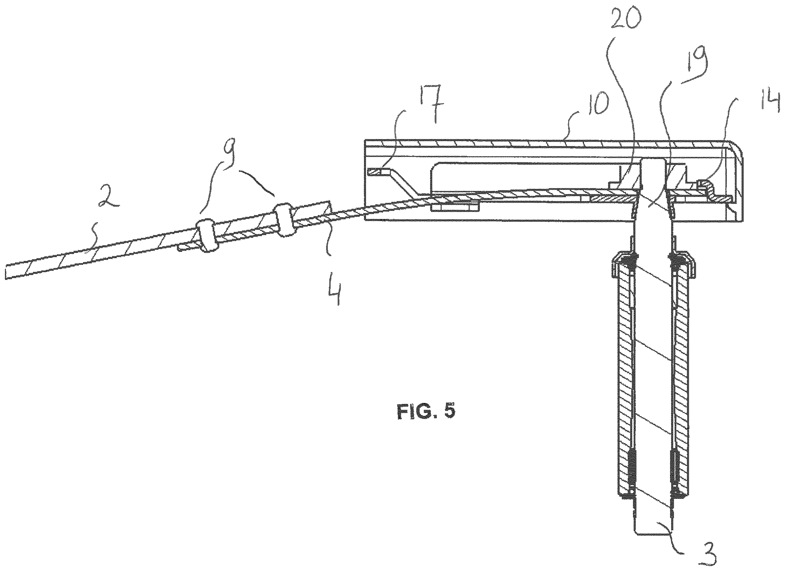

With reference to figure 1 below, the elongated plate member 4 is made of a resilient material in a direction of its length l and is biased in order to exert a pressure onto said arm member (and thus the wiper blade connected thereto) towards said windscreen to be wiped. Said plate member 4 is more rigid in a direction of its width w in order to withstand torsion forces exerted by the wiper blade and the drive shaft 3 during wiping. As shown in figure 1 below, the plate member 4 is provided with several rectangular weakening holes 7 in order to decrease the rigidity thereof in direction of its length l. Circular hole 8 therein is arranged to receive and accommodate the drive shaft 3 (see figure 5). By way of illustration are the arm member 2 and the plate member 4 interconnected through rivets 9.

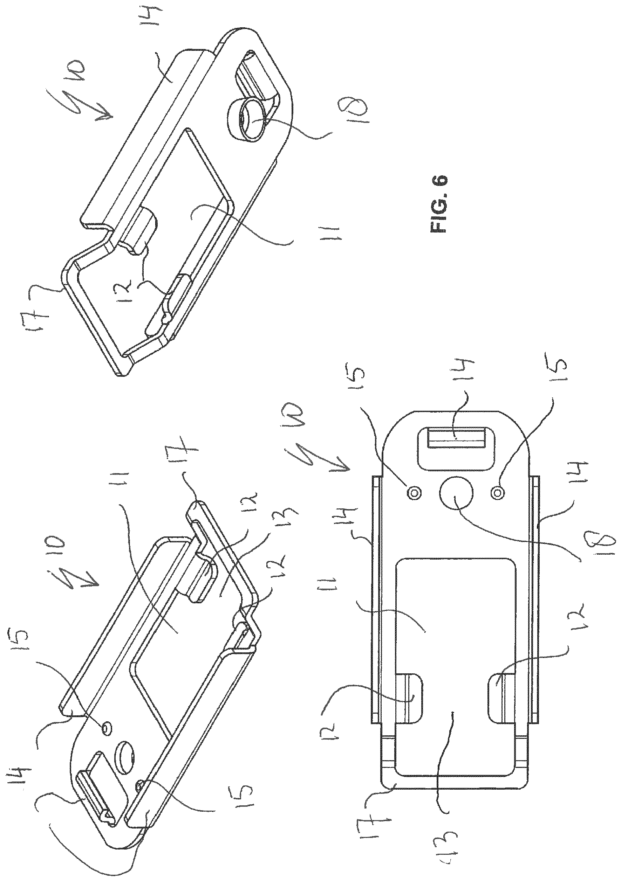

Figures 2 and 3 show the assembly of the arm member 2, the plate member 4 and a stiffening member 10 in a wiping position and an elevated position, respectively. The stiffening member 10 is shown in detail in various views in figure 6, as will be discussed hereunder.

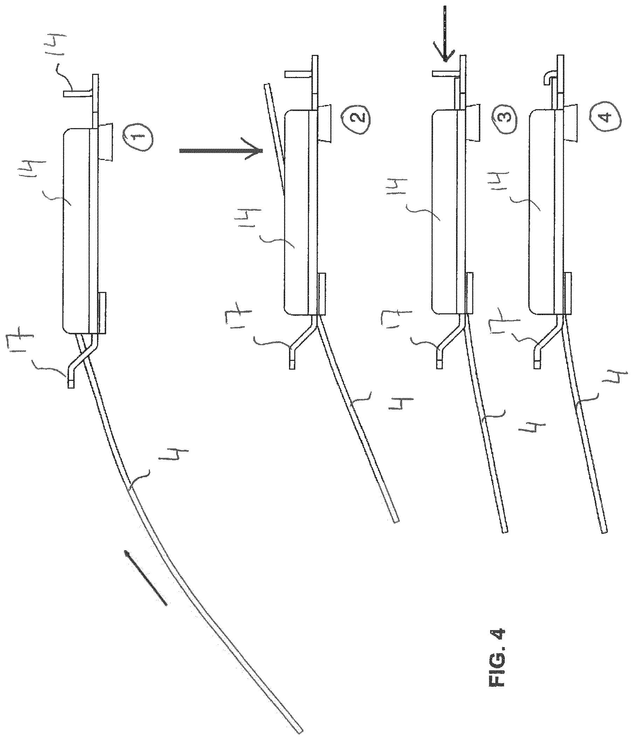

In figure 4 are shown successive steps 1 through 4 in interconnecting the plate member 4 and the stiffening member 10. Also with reference to figure 6 relating to the stiffening member 10 as such, the plate member 4 is introduced inside the stiffening member 10 along an S-shaped path or "sigmoid" path. The S-shaped path prevents the plate member 4 from being connected to the stiffening member 10 upside down. Said plate member 4 is slidably connected to said stiffening member 10 by sliding said plate member 4 from below said stiffening member 10, though an entrance hole 11 thereof, on top of said stiffening member 10. Reference is made to figure 4 steps 1 and 2, respectively. As shown in figure 6, said stiffening member 10 is provided with opposite, downwardly and inwardly extending legs 12 so to form a groove 13 for guiding said plate member 4 from below said stiffening member 10 through said entrance hole 11 thereof. As the legs 12 extend downwardly, they prevent the plate member 4 from being erroneously fastened to the bottom of the stiffening member 10. Said stiffening member 10 is further provided with upwardly extending cams 14 for form-closing said plate member 4 on top of said stiffening member 10. Reference is made to figure 4 steps 3 and 4, respectively, as well as figure 6. Said cams 14 may be permanently deformed onto the plate member 4 after the plate member 4 and stiffening member 10 are interconnected, such that a highly rigid connection is achieved. Further, said stiffening member 10 is provided with two upwardly extending protrusions 15 for engaging into correspondingly shaped holes 16 inside said plate member 4 for proper alignment. Finally, said stiffening member 10 is provided with a transverse bridge 17 limiting an upward movement of said arm member 4 relative to shaft 3 in mounted position thereof, thus preventing a user from lifting the arm member 4 to such an extent that the plate member 4 would become permanently deformed, diminishing its bias.

Referring to figure 5, the shaft 3 extending through co-axial holes 8,18 of the plate member 4 and the stiffening member 10 comprises a conical part 19 with external thread in order to clamp the plate member 4 thereto by means of a nut 20.

The invention is not restricted to the preferred embodiments shown, but also extends to other preferred variants falling within the scope of the appended claims. For example, the holes in the plate member and/or the stiffening member 10 may be made through a stamping operation which ensures an very reliable and controllable operation. In the alternative, a cutting operation may be appropriate.

## Claims

1. A windscreen wiper arm (1), particularly for automobiles, comprising an arm member(2) near a first end thereof arranged to be pivotally and detachably connected to a drive shaft (3) for transferring a reciprocal movement to said arm member (2), said arm member (2) being movable between a wiping position, wherein said arm member (2) extends substantially parallel to a windscreen to be wiped, and an elevated position, wherein said arm member (2) extends away from a windscreen to be wiped, said arm member (2) near a second end thereof being arranged to be pivotally and detachably connected to a connecting device of a wiper blade, wherein said windscreen wiper arm (1) comprises a plate member (4) arranged for connecting said arm member (2) to said drive shaft (3), wherein said plate member (4) is made of a resilient material and is biased in order to exert a pressure onto said arm member (2) towards said windscreen to be wiped, **characterized in that** said plate member (4) is connected to a stiffening member (10) for pre-stressing said plate member (4) at the location of its connection to the stiffening member (10), and wherein said stiffening member (10) is provided with a hole (18) with a closed circumference arranged for accommodating said shaft (3) .

2. A windscreen wiper arm (1) according to claim 1, wherein said plate member (4) is elongated, wherein said plate member (4) is resilient in a direction of its length (1) in order to exert a pressure onto said arm member (2) towards said windscreen to be wiped, and wherein said plate member (4) is rigid in a direction of its width (w) in order to withstand torsion forces exerted by said wiper blade during wiping.

3. A windscreen wiper arm (1) according to claim 1 or 2, wherein said plate member (4) has a hole (8) with a closed circumference arranged for accommodating said shaft (3).

4. A windscreen wiper arm (1) according to claim 3, wherein said plate member (4) at a side thereof opposite said hole (8) is connected to said arm member (2) .

5. A windscreen wiper arm (1) according to any of the preceding claims 1 through 4, wherein said plate member (4) is a single constructional element made in one piece of resilient material.

6. A windscreen wiper arm (1) according to at least claims 1 and 3, wherein said hole (18) of said stiffening member (10) is co-axial with said hole (8) of said plate member (4).

7. A windscreen wiper arm (1) according to any of the preceding claims 1 through 6, wherein said plate member (4) is slidably connected to said stiffening member (10) .

8. A windscreen wiper arm (1) according to claim 7, wherein said plate member (4) is slidably connected to said stiffening member (10) by sliding said plate member (4) from below said stiffening member (10), though an entrance hole (11) thereof, on top of said stiffening member (10).

9. A windscreen wiper arm (1) according to claim 8, wherein said stiffening member (10) is provided with opposite, downwardly and inwardly extending legs (12) so to form a groove (13) for guiding said plate member (4) from below said stiffening member (10) through said entrance hole (11) thereof.

10. A windscreen wiper arm (1) according to claim 9, wherein said stiffening member (10) is provided with a longitudinal, resilient tongue for guiding said plate member (4) inside said groove (13).

11. A windscreen wiper arm (1) according to any of the preceding claims 1 through 10, wherein said stiffening member (10) is provided with upwardly extending cams (14) for form-closing or force-closing said plate member (4) on top of said stiffening member (10) .

12. A windscreen wiper arm (1) according to any of the preceding claims 1 through 11, wherein said stiffening member (10) is provided with upwardly extending protrusions (15) for engaging into correspondingly shaped holes (16) inside said plate member (4).

13. A windscreen wiper arm (1) according to any of the preceding claims 1 through 11, wherein said stiffening member (10) is provided with a transverse bridge (17) limiting an upward movement of said arm member (2) relative to said shaft (3) in mounted position thereof.

14. A windscreen wiper arm (1) according to at least claims 9 and 13, wherein said legs (12) and said bridge (17) of said stiffening member (10) delimit said entrance hole (11) of said stiffening member (10).

15. A windscreen wiper arm (1) according to any of the preceding claims, wherein said plate member (4) is provided with at least one weakening hole (7) in order to decrease the rigidity thereof in direction of its length (1).

16. A windscreen wiper arm (1) according to any of the preceding claims, wherein an elongated cap is connected to at least one of the drive shaft (3), the arm member (2) and the connecting device.

## Patentansprüche

1. Windschutzscheibenwischerarm (1), insbesondere für Automobile, umfassend ein Armelement (2) nahe einem ersten Ende davon, das angeordnet ist, um mit einer Antriebswelle (3) zum Übertragen einer wechselseitigen Bewegung zu dem Armelement (2) schwenkbar und lösbar verbunden zu werden, wobei das Armelement (2) zwischen einer Wischposition, wobei sich das Armelement (2) im Wesentlichen parallel zu einer zu wischenden Windschutzscheibe erstreckt, und einer erhöhten Position bewegbar ist, wobei sich das Armelement (2) von einer zu wischenden Windschutzscheibe weg erstreckt, wobei das Armelement (2) nahe einem zweiten Ende davon angeordnet ist, um mit einer Verbindungsvorrichtung eines Wischerblatts schwenkbar und lösbar verbunden ist, wobei der Windschutzscheibenwischerarm (1) ein Plattenelement (4) umfasst, das zum Verbinden des Armelements (2) mit der Antriebswelle (3) angeordnet ist, wobei das Plattenelement (4) aus einem elastischen Material hergestellt ist und vorbelastet ist, um einen Druck auf das Armelement (2) in Richtung der zu wischenden Windschutzscheibe auszuüben, **dadurch gekennzeichnet, dass** das Plattenelement (4) mit einem Versteifungselement (10) zum Vorspannen des Plattenelements (4) an der Stelle seiner Verbindung zu dem Versteifungselement (10) verbunden ist und wobei das Versteifungselement (10) mit einem Loch (18) mit einem geschlossenen Umfang versehen ist, das zum Aufnehmen der Welle (3) angeordnet ist.

2. Windschutzscheibenwischerarm (1) nach Anspruch 1, wobei das Plattenelement (4) länglich ist, wobei das Plattenelement (4) in einer Richtung seiner Länge (l) elastisch ist, um einen Druck auf das Armelement (2) in Richtung der zu wischenden Windschutzscheibe auszuüben, und wobei das Plattenelement (4) in einer Richtung seiner Breite (w) starr ist, um Torsionskräften standzuhalten, die durch das Wischerblatt während des Wischens ausgeübt werden.

3. Windschutzscheibenwischerarm (1) nach Anspruch 1 oder 2, wobei das Plattenelement (4) ein Loch (8) mit einem geschlossenen Umfang aufweist, das zum Aufnehmen der Welle (3) angeordnet ist.

4. Windschutzscheibenwischerarm (1) nach Anspruch 3, wobei das Plattenelement (4) an einer Seite davon gegenüber dem Loch (8) mit dem Armelement (2) verbunden ist.

5. Windschutzscheibenwischerarm (1) nach einem der vorstehenden Ansprüche 1 bis einschließlich 4, wobei das Plattenelement (4) ein einzelnes Konstruktionselement ist, das aus einem Stück von elastischem Material hergestellt ist.

6. Windschutzscheibenwischerarm (1) nach mindestens einem der Ansprüche 1 und 3, wobei das Loch (18) des Versteifungselements (10) mit dem Loch (8) des Plattenelements (4) koaxial ist.

7. Windschutzscheibenwischerarm (1) nach einem der vorstehenden Ansprüche 1 bis einschließlich 6, wobei das Plattenelement (4) mit dem Versteifungselement (10) verschiebbar verbunden ist.

8. Windschutzscheibenwischerarm (1) nach Anspruch 7, wobei das Plattenelement (4) mit dem Versteifungselement (10) verschiebbar verbunden ist, durch ein Verschieben des Plattenelements (4) von unterhalb des Versteifungselements (10), durch ein Eintrittsloch (11) davon, an die Oberseite des Versteifungselements (10).

9. Windschutzscheibenwischerarm (1) nach Anspruch 8, wobei das Versteifungselement (10) mit gegenüberliegenden, sich nach unten und nach innen erstreckenden Schenkeln (12) versehen ist, um eine Nut (13) zum Führen des Plattenelements (4) von unterhalb des Versteifungselements (10) durch das Eintrittsloch (11) davon auszubilden.

10. Windschutzscheibenwischerarm (1) nach Anspruch 9, wobei das Versteifungselement (10) mit einer länglichen, elastischen Feder zum Führen des Plattenelements (4) innerhalb der Nut (13) versehen ist.

11. Windschutzscheibenwischerarm (1) nach einem der vorstehenden Ansprüche 1 bis einschließlich 10, wobei das Versteifungselement (10) mit sich nach oben erstreckenden Nocken (14) zum Formschließen oder Kraftschließen des Plattenelements (4) an der Oberseite des Versteifungselements (10) versehen ist.

12. Windschutzscheibenwischerarm (1) nach einem der vorstehenden Ansprüche 1 bis einschließlich 11, wobei das Versteifungselement (10) mit sich nach oben erstreckenden Vorsprüngen (15) versehen ist, um in entsprechend geformte Löcher (16) innerhalb des Plattenelements (4) einzugreifen.

13. Windschutzscheibenwischerarm (1) nach einem der vorstehenden Ansprüche 1 bis einschließlich 11, wobei das Versteifungselement (10) mit einer Querbrücke (17) versehen ist, die eine Aufwärtsbewegung des Armelements (2) relativ zu der Welle (3) in der montierten Position davon begrenzt.

14. Windschutzscheibenwischerarm (1) nach mindestens einem der Ansprüche 9 und 13, wobei die Schenkel (12) und die Brücke (17) des Versteifungselements (10) das Eintrittsloch (11) des Versteifungselements (10) abgrenzen.

15. Windschutzscheibenwischerarm (1) nach einem der vorstehenden Ansprüche, wobei das Plattenelement (4) mit mindestens einem Schwächungsloch (7) versehen ist, um die Starrheit davon in Richtung seiner Länge (l) zu verringern.

16. Scheibenwischerarm (1) nach einem der vorstehenden Ansprüche, wobei eine längliche Kappe mit mindestens einem der Antriebswelle (3), des Armelements (2) und der Verbindungsvorrichtung verbunden ist.

## Revendications

1. Bras d'essuie-glace (1), en particulier pour automobiles, comprenant un élément de bras (2) à proximité d'une première extrémité de celui-ci agencé pour être relié de manière pivotante et amovible à un arbre d'entraînement (3) pour transférer un mouvement de va-et-vient audit élément de bras (2), ledit élément de bras (2) étant mobile entre une position d'essuyage, dans lequel ledit élément de bras (2) s'étend sensiblement parallèle à un pare-brise à essuyer, et une position élevée, dans lequel ledit élément de bras (2) s'étend à l'écart d'un pare-brise à essuyer, ledit élément de bras (2) à proximité d'une seconde extrémité de celui-ci étant agencé pour être relié de manière pivotante et amovible à un dispositif de liaison d'un balai d'essuie-glace, dans lequel ledit bras d'essuie-glace (1) comprend un élément de plaque (4) agencé pour relier ledit élément de bras (2) audit arbre d'entraînement (3), dans lequel ledit élément de plaque (4) est constitué d'un matériau élastique et est sollicité afin d'exercer une pression sur ledit élément de bras (2) vers ledit pare-brise à essuyer, **caractérisé en ce que** ledit élément de plaque (4) est relié à un élément de raidissement (10) pour précontraindre ledit élément de plaque (4) au niveau de l'emplacement de sa liaison à l'élément de raidissement (10), et dans lequel ledit élément de raidissement (10) est pourvu d'un trou (18) avec une circonférence fermée agencée pour recevoir ledit arbre (3).

2. Bras d'essuie-glace (1) selon la revendication 1, dans lequel ledit élément de plaque (4) est allongé, dans lequel ledit élément de plaque (4) est élastique dans une direction de sa longueur (1) afin d'exercer une pression sur ledit élément de bras (2) vers ledit pare-brise à essuyer, et dans lequel ledit élément de plaque (4) est rigide dans une direction de sa largeur (w) afin de résister aux forces de torsion exercées par ledit balai d'essuie-glace lors d'un essuyage.

3. Bras d'essuie-glace (1) selon la revendication 1 ou 2, dans lequel ledit élément de plaque (4) a un trou (8) avec une circonférence fermée agencée pour recevoir ledit arbre (3).

4. Bras d'essuie-glace (1) selon la revendication 3, dans lequel ledit élément de plaque (4) au niveau d'un côté de celui-ci opposé audit trou (8) est relié audit élément de bras (2).

5. Bras d'essuie-glace (1) selon l'une quelconque des revendications précédentes 1 à 4, dans lequel ledit élément de plaque (4) est un élément de construction unique réalisé en une pièce de matériau élastique.

6. Bras d'essuie-glace (1) selon au moins les revendications 1 et 3, dans lequel ledit trou (18) dudit élément de raidissement (10) est co-axial avec ledit trou (8) dudit élément de plaque (4).

7. Bras d'essuie-glace (1) selon l'une quelconque des revendications précédentes 1 à 6, dans lequel ledit élément de plaque (4) est relié de manière coulissante audit élément de raidissement (10).

8. Bras d'essuie-glace (1) selon la revendication 7, dans lequel ledit élément de plaque (4) est relié de manière coulissante audit élément de raidissement (10) en faisant coulisser ledit élément de plaque (4) en dessous dudit élément de raidissement (10), à travers un trou d'entrée (11) de celui-ci, au-dessus dudit élément de raidissement (10).

9. Bras d'essuie-glace (1) selon la revendication 8, dans lequel ledit élément de raidissement (10) est pourvu de pattes opposées, s'étendant vers le bas et vers l'intérieur (12) de manière à former une rainure (13) pour guider ledit élément de plaque (4) en dessous dudit élément de raidissement (10) à travers ledit trou d'entrée (11) de celui-ci.

10. Bras d'essuie-glace (1) selon la revendication 9, dans lequel ledit élément de raidissement (10) est pourvu d'une languette élastique, longitudinale pour guider ledit élément de plaque (4) à l'intérieur de ladite rainure (13).

11. Bras d'essuie-glace (1) selon l'une quelconque des revendications précédentes 1 à 10, dans lequel ledit élément de raidissement (10) est pourvu de cames s'étendant vers le haut (14) pour la fermeture de forme ou la fermeture forcée dudit élément de plaque (4) au-dessus dudit élément de raidissement (10).

12. Bras d'essuie-glace (1) selon l'une quelconque des revendications précédentes 1 à 11, dans lequel ledit élément de raidissement (10) est pourvu de saillies s'étendant vers le haut (15) pour venir en prise dans des trous de forme correspondante (16) à l'intérieur dudit élément de plaque (4).

13. Bras d'essuie-glace (1) selon l'une quelconque des revendications précédentes 1 à 11, dans lequel ledit élément de raidissement (10) est pourvu d'un pont transversal (17) limitant un mouvement vers le haut dudit élément de bras (2) par rapport audit arbre (3) dans la position montée de celui-ci.

14. Bras d'essuie-glace (1) selon au moins les revendications 9 et 13, dans lequel lesdites pattes (12) et ledit pont (17) dudit élément de raidissement (10) délimitent ledit trou d'entrée (11) dudit élément de raidissement (10).

15. Bras d'essuie-glace (1) selon l'une quelconque des revendications précédentes, dans lequel ledit élément de plaque (4) est pourvu d'au moins un trou d'affaiblissement (7) afin de diminuer la rigidité de celui-ci en direction de sa longueur (l).

16. Bras d'essuie-glace (1) selon l'une quelconque des revendications précédentes, dans lequel un capuchon allongé est relié à au moins l'un parmi l'arbre d'entraînement (3), l'élément de bras (2) et le dispositif de liaison.
